# EUROPEAN PATENT APPLICATION

(11) **EP 3 961 153 A1**
(43) Date of publication of application: **02.03.2022**
(21) Application number: 21190709.2
(22) Date of filing: 11.08.2021
(51) Int. Cl.: G01C 21/00, G06Q 20/06, H04L 9/00

(54) **NAVIGATION SYSTEM WITH HIGH DEFINITION MAPPING MECHANISM AND METHOD OF OPERATION THEREOF**

(30) Priority: 28.08.2020 US 202017005448
(71) Applicant: TeleNav, Inc., Santa Clara, CA 95054 (US)
(72) Inventor: Shinkar, Manuj Shafiq, San Jose, California, 95134 (US); Glebov, Alexander G., San Jose, California, 95120 (US); Warren, Harris, Los Gatos, California, 95032 (US)
(74) Representative: Kretschmann, Dennis

(57) **Abstract**

A navigation system (100) includes: a communication circuit (536) configured to: transmit a request for an initial mapping (401) of a region (402), and receive a sensor data packet (111) for the region (402) from a map generation resource (334); a control circuit (534), coupled to the communication circuit (536), configured to: compile the high definition map (109) from the sensor data packet (111); and publish the high definition map (109), as metric-based content (302), to a navigation exchange mechanism (306).

## Description

### TECHNICAL FIELD

An embodiment of the present invention relates generally to a navigation system, and more particularly to a system with a high definition mapping mechanism.

### BACKGROUND ART

The rise of autonomous self-driving vehicles along with non-autonomous or semi-autonomous vehicles requires additional details in maps provided to the autonomous vehicles. The high definition map requirement provides additional information about road conditions and marking, as well as detailed safety guidance about the suitability of the streets to support autonomous vehicle operations. Research and development in the existing technologies can take a myriad of different directions.

As driver assisted and autonomous vehicles take to the road, the lack of high definition maps increase the risk of accidents or incorrect routing to allow the vehicles to operate properly. As additional information becomes available for details of road conditions, road marking, route signage, and available resources, the driver assisted and autonomous vehicles can safely take to the road. However, in the midst of increase in information readily available to the user, utilizing externally sourced information to provide additional features for users has yet been fully utilized.

Thus, a need still remains for a navigation system with a high definition mapping mechanism. In view of the ever-increasing commercial competitive pressures, along with growing consumer expectations and the diminishing opportunities for meaningful product differentiation in the marketplace, it is increasingly critical that answers be found to these problems. Additionally, the need to reduce costs, improve efficiencies and performance, and meet competitive pressures adds an even greater urgency to the critical necessity for finding answers to these problems.

Solutions to these problems have been long sought but prior developments have not taught or suggested any solutions and, thus, solutions to these problems have long eluded those skilled in the art.

### DISCLOSURE OF THE INVENTION

An embodiment of the present invention provides a method of operation of a navigation system including: requesting an initial mapping of a region; receiving a sensor data packet for the region from the a map generation resource; compiling a high definition map from the sensor data packet; and publishing the high definition map, as metric-based content, to a navigation exchange mechanism.

An embodiment of the present invention provides a navigation system, including a communication circuit configured to: request an initial mapping of a region, and receive a sensor data packet for the region from a map generation resource; a control circuit, coupled to the communication circuit, configured to: compile the high definition map from the sensor data packet; and publish the high definition map, as metric-based content, to a navigation exchange mechanism.

An embodiment of the present invention provides a non-transitory computer readable medium including instructions for a navigation system, including: requesting an initial mapping of a region; receiving a sensor data packet for the region from the a map generation resource; compiling a high definition map from the sensor data packet; and publishing the high definition map, as metric-based content, to a navigation exchange mechanism.

Certain embodiments of the invention have other steps or elements in addition to or in place of those mentioned above. The steps or elements will become apparent to those skilled in the art from a reading of the following detailed description when taken with reference to the accompanying drawings.

### BRIEF DESCRIPTION OF THE DRAWINGS

FIG. 1 is a navigation system with a high definition mapping mechanism in an embodiment of the present invention.
FIG. 2 is an example of a top plan view illustration of various devices for implementing the navigation system.
FIG. 3 is an exemplary block diagram of the navigation system including a high definition map development and delivery mechanism.
FIG. 4 is an example of an initial mapping of a portion of a parking structure for the navigation system.
FIG. 5 is an exemplary block diagram of the navigation system.
FIG. 6 is an exemplary control flow of the navigation system.
FIG. 7 is a flow chart of a method of operation of a navigation system in an embodiment of the present invention.

### BEST MODE FOR CARRYING OUT THE INVENTION

The following embodiments can generate high definition maps, which enables vehicle movement control for operating or controlling physical movement of a vehicle. The vehicle movement control can be based on a travel-lane identification along with a current location, and can include a control vehicle speed for providing a lane-specific cruise control feature for the vehicle.

The vehicle movement control can further be based on an area profile corresponding to a real-time state or status of a geographic area, including representations, locations, statuses, or a combination thereof of one or more vehicles in the geographic area. The area profile can be based on vehicle data for representing status of a reporting vehicle or device, the vehicle data for representing sensor data associated with an environment or a surrounding of the reporting vehicle or the device, or a combination thereof.

The following embodiments are described in sufficient detail to enable those skilled in the art to make and use the invention. It is to be understood that other embodiments would be evident based on the present disclosure, and that system, process, or mechanical changes may be made without departing from the scope of an embodiment of the present invention.

In the following description, numerous specific details are given to provide a thorough understanding of the invention. However, it will be apparent that the invention may be practiced without these specific details. In order to avoid obscuring an embodiment of the present invention, some well-known circuits, system configurations, and process steps are not disclosed in detail.

The drawings showing embodiments of the system are semi-diagrammatic, and not to scale and, particularly, some of the dimensions are for the clarity of presentation and are shown exaggerated in the drawing figures. Similarly, although the views in the drawings for ease of description generally show similar orientations, this depiction in the figures is arbitrary for the most part. Generally, the invention can be operated in any orientation. The embodiments have been numbered first embodiment, second embodiment, etc. as a matter of descriptive convenience and are not intended to have any other significance or provide limitations for an embodiment of the present invention.

One skilled in the art would appreciate that the format with which navigation information is expressed is not critical to some embodiments of the invention. For example, in some embodiments, navigation information is presented in the format of (X, Y, Z); where X and Y and Z are three coordinates that define the geographic location, i.e., a position of a user.

In an alternative embodiment, navigation information is presented by longitude and latitude related information. In a further embodiment of the present invention, the navigation information also includes a velocity element including a speed component and a heading component.

The term "initial mapping" referred to herein can include the navigation information described as well as information relating to providing a first set of the high definition map of a space of general interest that was unknown prior.

Many embodiments or aspects of the present disclosure described below can take the form of computer-executable or controller-executable instructions, including routines executed by a programmable computer or controller. Those skilled in the relevant art will appreciate that the disclosed techniques can be practiced on computer or controller systems other than those shown and described below. The techniques described herein can be embodied in a special-purpose computer or data processor that is specifically programmed, configured, or constructed to execute one or more of the computer-executable instructions described below. Accordingly, the terms "computer" and "controller" as generally used herein refer to any data processor and can include Internet appliances and handheld devices, including palm-top computers, wearable computers, cellular or mobile phones, multiprocessor systems, processor-based or programmable consumer electronics, network computers, mini computers, and the like. Information handled by these computers and controllers can be presented at any suitable display medium, including a liquid crystal display (LCD). Instructions for executing computer- or controller-executable tasks can be stored in or on any suitable computer-readable medium, including hardware, firmware, or a combination of hardware and firmware. Instructions can be contained in any suitable memory device, including, for example, a flash drive, USB device, and/or other suitable medium.

The terms "coupled" and "connected," along with their derivatives, can be used herein to describe structural relationships between components. It should be understood that these terms are not intended as synonyms for each other. Rather, in particular embodiments, "connected" can be used to indicate that two or more elements are in direct contact with each other. Unless otherwise made apparent in the context, the term "coupled" can be used to indicate that two or more elements are in either direct or indirect (with other intervening elements between them) contact with each other, or that the two or more elements cooperate or interact with each other (e.g., as in a cause-and-effect relationship, such as for signal transmission/reception or for function calls), or both.

The term "module" referred to herein can include or be implemented as or include software running on specialized hardware, hardware, or a combination thereof in the present invention in accordance with the context in which the term is used. For example, the software can be machine code, firmware, embedded code, and application software. The software can also include a function, a call to a function, a code block, or a combination thereof. Also for example, the hardware can be gates, circuitry, processor, computer, integrated circuit, integrated circuit cores, a pressure sensor, an inertial sensor, a microelectromechanical system (MEMS), passive devices, physical non-transitory memory medium including instructions for performing the software function, a portion therein, or a combination thereof to control one or more of the hardware units or circuits. Further, if a "module" or "unit" is written in the system claims section below, the "module" or "unit" is deemed to include hardware circuitry for the purposes and the scope of the system claims.

The modules or units in the following description of the embodiments can be coupled or attached to one another as described or as shown. The coupling or attachment can be direct or indirect without or with intervening items between coupled or attached modules or units. The coupling or attachment can be by physical contact or by communication between modules or units, such as wireless communication.

It is also understood that the nouns or elements in the embodiments can be described as a singular instance. It is understood that the usage of singular is not limited to singular but the singular usage can be applicable to multiple instances for any particular noun or element in the application. The numerous instances can be the same or similar or can be different.

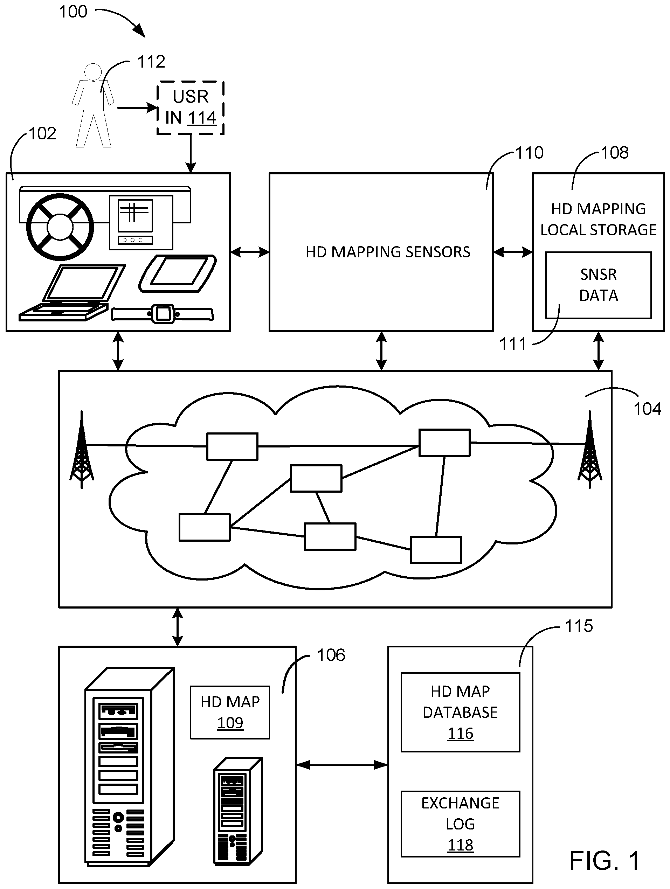

Referring now to FIG. 1, therein is shown a navigation system 100 with a high definition mapping mechanism in an embodiment of the present invention. The navigation system 100 can include a first device 102, such as a client or a server, connected to a second device 106, such as a client or server.

The navigation system 100 can include a system for searching or providing guidance or information associated with geographic locations, speed control, a regulatory system for enabling access to a device or a vehicle, or a combination thereof. The first device 102 can communicate with the second device 106 through a network 104, such as a wireless or wired network.

For example, the first device 102 can be of any of a variety of computing devices, such as a cellular phone, personal digital assistant, a notebook computer, a wearable device, internet of things (IoT) device, automotive telematics navigation system, or other multifunctional device. Also, for example, the first device 102 can include a device or a subsystem, an autonomous or self-maneuvering vehicle or object, a remote-controlled vehicle or object, or a combination thereof.

The first device 102 can couple, either directly or indirectly, to the network 104 to communicate with the second device 106 or can be a stand-alone device. The first device 102 can further be separate form or incorporated with a vehicle, such as a car, truck, bus, or train.

For illustrative purposes, the navigation system 100 is described with the first device 102 as a mobile computing device, although it is understood that the first device 102 can be different types of devices. For example, the first device 102 can also be a non-mobile computing device, such as a server, a server farm, or a desktop computer.

The second device 106 can be any of a variety of centralized or decentralized computing devices, or high definition video processing devices. For example, the second device 106 can be a computer, grid computing resources, a virtualized computer resource, cloud computing resource, routers, switches, peer-to-peer distributed computing devices, or a combination thereof.

The second device 106 can be centralized in a single room, distributed across different rooms, distributed across different geographical locations, embedded within a telecommunications network. The second device 106 can couple with the network 104 to communicate with the first device 102. The second device 106 can also be a client type device as described for the first device 102.

For illustrative purposes, the navigation system 100 is described with the second device 106 as a non-mobile computing device, although it is understood that the second device 106 can be different types of computing devices. For example, the second device 106 can also be a mobile computing device, such as notebook computer, another client device, a wearable device, or a different type of client device. The second device 106 can be a standalone device, or can be incorporated with a vehicle, such as a car, a truck, a bus, or a train.

Also, for illustrative purposes, the navigation system 100 is described with the second device 106 as a computing device, although it is understood that the second device 106 can be different types of devices. Also, for illustrative purposes, the navigation system 100 is shown with the second device 106 and the first device 102 as end points of the network 104, although it is understood that the navigation system 100 can include a different partition between the first device 102, the second device 106, and the network 104. For example, the first device 102, the second device 106, or a combination thereof can also function as part of the network 104.

The network 104 can span and represent a variety of networks. For example, the network 104 can include wireless communication, wired communication, optical, ultrasonic, or the combination thereof. Satellite communication, cellular communication, Bluetooth, Infrared Data Association standard (IrDA), wireless fidelity (WiFi), and worldwide interoperability for microwave access (WiMAX) are examples of wireless communication that can be included in the communication path. Ethernet, digital subscriber line (DSL), fiber to the home (FTTH), and plain old telephone service (POTS) are examples of wired communication that can be included in the network 104. Further, the network 104 can traverse a number of network topologies and distances. For example, the network 104 can include direct connection, personal area network (PAN), local area network (LAN), metropolitan area network (MAN), wide area network (WAN), or a combination thereof.

The navigation system 100 can provide additional features that are not available in prior art navigation systems. The first device 102 can be coupled to high definition mapping sensors 110 and a high definition mapping local storage 108. The high definition mapping sensors 110 are sensors, such as a set of optical cameras, configured to monitor, observe, record, or a combination thereof the surroundings of the first device 102. The high definition mapping local storage 108 provides a non-transitory storage medium. For example, the high definition mapping local storage 108 can be implemented in a number of ways, such as a non-volatile storage device, such as a hard disk drive, a solid state storage device (SSD), a FLASH memory card, or a combination thereof. The high definition mapping local storage 108 can be coupled to the high definition mapping sensors 110 in order to store a sensor data packet 111. The sensor data packet 111 can provide the information captured by the high definition mapping sensors 110, a time and location of the information that was captured by the high definition mapping sensors 110 and recorded in the high definition mapping local storage 108. By way of an example, the term "high definition" as referred to herein is an image captured in JPEG2000 format having a 4096 by 4096 pixels count, or better.

The navigation system 100 can be operated by a user 112. The user 112 can include a person or an entity accessing or utilizing the navigation system 100 or a device therein. For example, the user 112 can include a person owning or operating the first device 102, a service, or a combination thereof. Also, for example, the user 112 can access or utilize the second device 106 through the first device 102, a service, or a combination thereof.

The navigation system 100 can further process a direct user input 114 from the user 112. The direct user input 114 can include a request for navigation assistance, location of a point of interest, parking location assistance, restaurant assistance, lodging assistance, location of gas stations, event reservations, or a combination thereof. The direct user input 114 can be provided by or from the user 112 directly to or directly on the first device 102. The direct user input 114 can include the input or the stimulus directly for or related to a corresponding software, application, feature, or a combination thereof.

The navigation system 100 can implement one or more embodiments without the direct user input 114. The navigation system 100 can further implement one or more embodiments using the direct user input 114 unrelated thereto, previous instances of the direct user input 114, or a combination thereof. Further details are discussed below.

The second device 106 can receive the sensor data packet 111 from the first device 102. The second device 106 can process the sensor data packet 111 in order to produce a high definition map 109. By way of an example, the term "high definition map" referred to herein is a record of a physical space of general interest that provides the layout and dimensions of the physical space.

The second device 106 can process the sensor data packet 111 in order to produce the high definition map 109. By way of an example, the second device 106 can verify the sensor data packet 111 by checking the time and location information in order to identify that it represents a region of interest and then compile the information captured by the high definition mapping sensors 110 to produce the high definition map 109.

The second device 106 can be coupled to a navigation file storage 115, such as a random array of independent disks (RAID), solid state storage devices (SSD's), a storage array including both Hard disks and SSD's, or a combination thereof. The navigation file storage 115 can maintain a high definition map database 116 and an exchange log 118. The high definition map database 116 can be a section of the navigation file storage 115 used to maintain the high definition map 109 including all areas of interest that have previously been processed by the navigation system 100. The exchange log 118 can be a section of the navigation file storage 115 used to account exchange rights and ratios of division between the user 112 and the navigation file storage 115. These functions will be discussed in greater detail later.

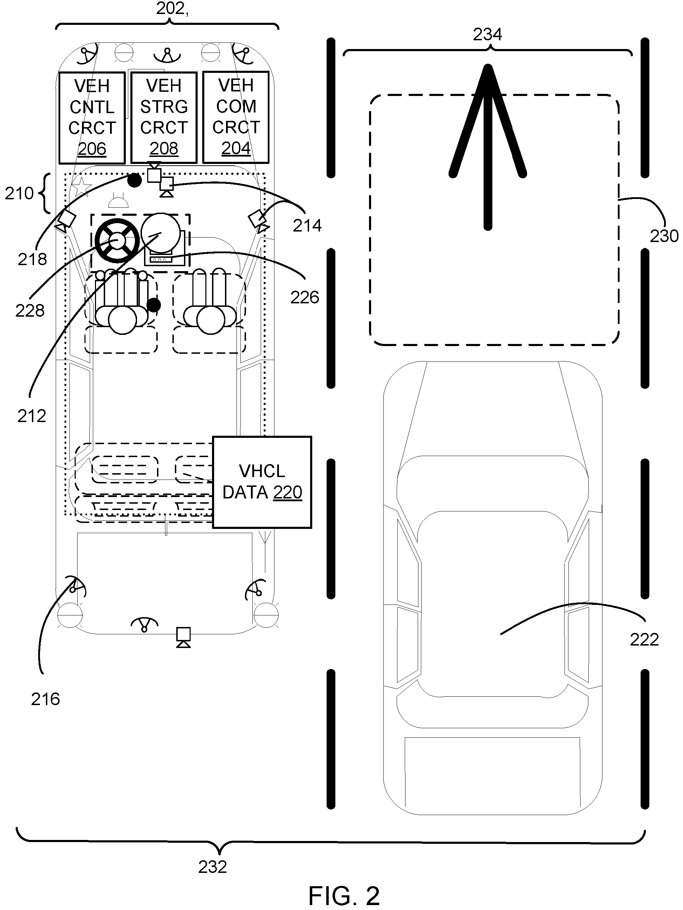

Referring now to FIG. 2, therein is shown an example of a top plan view illustration of various devices for implementing the navigation system 100 of FIG. 1. The navigation system 100 can include or interact with an autonomous vehicle 202.

The autonomous vehicle 202 is an object or a machine used for transporting people or goods capable of automatically maneuvering or operating the object or the machine. The autonomous vehicle 202 can include vehicles accessible by the user 112 of FIG. 1 for control, maneuver, operation, or a combination thereof. For example, the autonomous vehicle 202 can include a car, a truck, a cart, a drone, or a combination thereof.

The autonomous vehicle 202 can further be controlled or maneuvered without the direct user input 114 of FIG. 1 corresponding to the maneuver or the movement. For example, the autonomous vehicle 202 can include a self-driving vehicle, or a vehicle with automatic maneuvering features, such as smart cruise control or preventative breaking. The autonomous vehicle 202 can include a smart cruise control feature, capable of setting and adjusting the travel speed of the autonomous vehicle 202 without the direct user input 114. Also, for example, the autonomous vehicle 202 can be controlled or maneuvered by the navigation system 100, including the navigation system 100 controlling or setting a cruising speed or other physical maneuvers or movements of the autonomous vehicle 202.

The navigation system 100 can further utilize vehicle data 220 from one or more vehicles or devices. The vehicle data 220 can include information regarding the vehicle or the device, such as the first device 102 of FIG. 1, a vehicle corresponding to or associated with the device, or a combination thereof.

The vehicle data 220 can include a status, a state, a setting, a description, high definition maps 109 of Fig. 1, or a combination thereof regarding the device or the vehicle itself. The vehicle data 220 can further include information describing or representing surroundings or environment of the device or the vehicle reporting the vehicle data 220. For example, the vehicle data 220 can include speed data, navigation data, accessory or feature status, sensor data, traffic data, road condition data, or a combination thereof.

Also, for example, the vehicle data 220 can include an accessory status 226. The accessory status 226 can represent or describe a state of a circuit, a function, a feature, or a combination thereof for the corresponding vehicle. As a more specific example, the accessory status 226 can include an on-off state, a level or magnitude, or a combination thereof for lights, environmental settings, door or trunk, windshield wipers, communication settings, braking system, signal indicator, or a combination thereof for the corresponding vehicle.

The autonomous vehicle 202 or other vehicles interfacing with the navigation system 100 can include a device, a circuit, one or more specific sensors, such as environmental sensors 210, or a combination thereof for providing assistance or additional information to the user 112 controlling, maneuvering, or operating the autonomous vehicle 202. The autonomous vehicle 202 or any other vehicles can include a vehicle communication circuit 204, a vehicle control circuit 206, a vehicle storage circuit 208, other interfaces, or a combination thereof.

The vehicle storage circuit 208 can include a functional unit or circuit integral to the corresponding control vehicle and configured to store and recall information, including navigation instructions, the high definition map 109 of FIG. 1, system status, or a combination thereof. The vehicle storage circuit 208 can be a volatile memory, a nonvolatile memory, an internal memory, an external memory, or a combination thereof. For example, the vehicle storage circuit 208 can be a nonvolatile storage such as non-volatile random access memory (NVRAM), Flash memory, disk storage, or a volatile storage such as static random access memory (SRAM). The vehicle storage circuit 208 can record simultaneous streams from a visual sensor 214, such as a high definition camera sensor 214, a radar sensor 216, an accessory sensor 218, or a combination thereof. The separate streams can be combined to generate the sensor data packet 111 of FIG. 1.

The vehicle storage circuit 208 can store vehicle software, other relevant data, such as input information, information from sensors, processing results, information predetermined or preloaded by the navigation system 100 or vehicle manufacturer, or a combination thereof.

The vehicle control circuit 206 can include a function unit or circuit integral to the autonomous vehicle 202 and configured to execute or implement instructions. The vehicle control circuit 206 can execute or implement the vehicle software to provide the intelligence of the corresponding vehicle, the navigation system 100, or a combination thereof.

The vehicle control circuit 206 can be implemented in a number of different manners. For example, the vehicle control circuit 206 can be a processor, an application specific integrated circuit (ASIC) an embedded processor, a microprocessor, a hardware control logic, a hardware finite state machine (FSM), a digital signal processor (DSP), or a combination thereof. As a more specific example, the vehicle control circuit 206 can include an engine control unit, one or more central processing unit, or a combination thereof.

The vehicle communication circuit 204 can include a function unit or circuit integral to the corresponding vehicle, such as the autonomous vehicle 202, another vehicle, or a combination thereof. The vehicle communication circuit 204 can be configured to enable external communication to and from the corresponding vehicle. For example, the vehicle communication circuit 204 can permit the autonomous vehicle 202 to communicate with the first device 102, the second device 106 of FIG. 1, or a combination thereof.

The vehicle communication circuit 204 can also function as a communication hub allowing the autonomous vehicle 202 to function as part of the network 104 and not limited to be an end point or terminal circuit to the network 104. The vehicle communication circuit 204 can include active and passive components, such as microelectronics or an antenna, for interaction with the network 104. For example, the vehicle communication circuit 204 can include a modem, a transmitter, a receiver, a port, a connector, or a combination thereof for wired communication, wireless communication, or a combination thereof.

The vehicle communication circuit 204 can couple with the network 104 to send or receive information directly between the vehicle communication circuit 204 and the first device 102, the second device 106, or a combination thereof as end points of the communication, such as for direct line-of-sight communication or peer-to-peer communication. The vehicle communication circuit 204 can further couple with the network 104 to send or receive information through a server or another intermediate device in between endpoints of the communication.

The autonomous vehicle 202 or other vehicles can further include various interfaces. The autonomous vehicle 202 can include one or more interfaces for interaction or internal communication between functional units or circuits of the autonomous vehicle 202. For example, the autonomous vehicle 202 can include one or more interfaces, such as drivers, firmware, wire connections or buses, protocols, or a combination thereof, for the vehicle storage circuit 208, the vehicle control circuit 206, or a combination thereof.

The autonomous vehicle 202 or other vehicles can further include one or more interfaces for interaction with an occupant, an operator or a driver, a passenger, or a combination thereof relative to the corresponding vehicle. For example, the autonomous vehicle 202 or the other vehicles can include a user interface including input or output devices or circuits, such as a screen or touch screen, a speaker, a microphone, a keyboard or other input devices, an instrument panel, or a combination thereof.

The autonomous vehicle 202 can further include one or more interfaces along with switches or actuators for physically controlling movable components of the autonomous vehicle 202. For example, the autonomous vehicle 202 can include the one or more interfaces along with the controlling mechanisms to physically perform and control the maneuvering of the autonomous vehicle 202, such as for autonomous driving, smart cruise control, or maneuvering features.

The functional units or circuits in the autonomous vehicle 202 can work individually and independently of the other functional units or circuits. The autonomous vehicle 202 can work individually and independently from the first device 102, the network 104, the second device 106, other devices or vehicles, or a combination thereof.

The functional units or circuits described above can be implemented in hardware. For example, one or more of the functional units or circuits can be implemented using the a gate, circuitry, a processor, a computer, integrated circuit, integrated circuit cores, a pressure sensor, an inertial sensor, a microelectromechanical system (MEMS), a passive device, a physical non-transitory memory medium containing instructions for performing the software function, a portion therein, or a combination thereof.

The environmental sensors 210 are each a device or a circuit for detecting or identifying environment of the corresponding vehicle. The environmental sensors 210 can detect, identify, determine, or a combination thereof, such as for status, surroundings or movement for the corresponding vehicle. The environmental sensors 210 can detect, identify, determine, or a combination thereof for environment within a cabin of the corresponding vehicle, an environment external to and surrounding the corresponding vehicle, or a combination thereof. The environmental sensors 210 can be implement for the autonomous vehicle 202, a smart vehicle 222, the first device 102, or a combination thereof.

For example, the environmental sensors 210 can include a location-movement sensor 212, the visual sensor 214, such as the high definition camera sensor 214, the radar sensor 216, the accessory sensor 218, or the combination thereof. The location-movement sensor 212 can include a sensor for identifying or calculating a geographic location of the corresponding vehicle or device, determining a movement or speed of the corresponding vehicle or device, or a combination thereof. The location-movement sensor 212 can include an accelerometer, a speedometer, a Global Positioning System (GPS) receiver or device, a gyroscope or a compass, or a combination thereof. The autonomous vehicle 202 can include the environmental sensors 210 other than or in addition to the location-movement sensor 212.

The visual sensor 214 can include a sensor for detecting or determining visual information representing the environment external to and surrounding of the corresponding vehicle, including the high definition camera sensor 214. The visual sensor 214 can include a camera attached to or integral with the corresponding vehicle or device. For example, the visual sensor 214 can include a camera, such as forward facing camera, a rear-view or back-up camera, a side-view or a blind-spot camera, or a combination thereof. Also, for example, the visual sensor 214 can include an infrared sensor or a night vision sensor.

The visual sensor 214 can further include a camera on the first device 102 or another user device of the user 112 connected to and interacting with a vehicle. The visual sensor 214 can further include a cabin camera for detecting or determining visual information inside the vehicle or cabin of the vehicle. The visual sensor 214 can be a high definition camera that supports the JPEG2000 standard or better. The visual sensor 214 will have a minimum 4096 x 4096 pixel density for creating the sensor data packet 111 of FIG. 1.

The radar sensor 216 can include an object-detection system, device, or circuit. The radar sensor 216 can determine or identify an existence of an object or a target, such as an obstacle or another vehicle, external to the corresponding device or vehicle, a relative location or a distance between the object or the target and the corresponding device or vehicle, or a combination thereof.

The radar sensor 216 can utilize radio waves to determine or identify an existence of the object or the target, the relative location or a distance relative to the autonomous vehicle 202 or other corresponding device or vehicle, or a combination thereof. For example, the radar sensor 216 can include a proximity sensor or warning system, such as for an area in front of, behind, adjacent to or on a side of, or a combination thereof geographically or physically relative to the autonomous vehicle 202.

The accessory sensor 218 can include a sensor for determining or detecting a status of a subsystem or a feature of the corresponding device or vehicle. The accessory sensor 218 can determine or detect the status or a setting for windshield wipers, turn signals, gear setting, headlights, or a combination thereof of the corresponding vehicle.

The navigation system 100 can use one or more of the environmental sensors 210 corresponding to one or more devices, one or more vehicles, or a combination thereof to generate the vehicle data 220 describing or representing information regarding the environment within or surrounding the corresponding device or vehicle. The vehicle data 220 can be further processed with the vehicle control circuit 206, stored in the vehicle storage circuit 208, communicated to another device or vehicle through the vehicle communication circuit 204, or a combination thereof.

The smart vehicle 222 can include circuit or feature for providing enhanced features or controls. The smart vehicle 222 can include and leverage a computer circuitry for the enhanced features or controls. For example, the smart vehicle 222 can include the environmental sensors 210, such as cameras or proximity sensors, sensor data analysis, automated or driver-less maneuvering features, or a combination thereof. The smart vehicle 222 can generate, process, communicate, or a combination thereof for the vehicle data 220.

The autonomous vehicle 202 can be an instance of the smart vehicle 222. The smart vehicle 222 can further include or be integral with a user device or a mobile device illustrated in FIG. 1. For example, the smart vehicle 222 can include the first device 102.

As a more specific example, the vehicle communication circuit 204, the vehicle control circuit 206, the vehicle storage circuit 208, the environmental sensors 210, one or more interfaces, or a combination thereof can be included in or make up the first device 102 included in or integral with the smart vehicle 222. Also, as a more specific example, the smart vehicle 222 can include or be integral with the first device 102, including an embedded navigation system, an infotainment system, a smart driving or a driver assistance system, a self-driving or a maneuvering system for the vehicle, or a combination thereof.

The navigation system 100 can utilize the vehicle data 220 from devices, vehicles, or a combination thereof to dynamically determine and map a geographical area along with vehicles, pedestrians, objects, or a combination thereof within the geographical area. As a more specific example, the navigation system 100 can use the vehicle data 220 to dynamically locate and map vehicles on the road. The navigation system 100 can further utilize the data to control movement of the autonomous vehicle 202 at a lane level or granularity.

The travel-lane identification 230 is a representation of a traffic lane 232 occupied or travelled by the corresponding vehicle or device. The travel-lane identification 230 can be based on a numbering or a naming system. For example, the travel-lane identification 230 of the traffic lane 232 closest to an outer edge or boundary of the corresponding lane can be "outer" or "last" lane. Also, for example, the travel-lane identification 230 of the traffic lane 232 closest to the center of the road, nearest to a lane for opposite direction of travel, or a combination thereof can be numbered "1" or "0", "inner" or "first" lane.

The travel-lane identification 230 can identify, describe, or represent the traffic lane 232 occupied or traversed by the corresponding device or device, including the autonomous vehicle 202. The navigation system 100 can control, maneuver, generate signals or instructions corresponding thereto, or a combination thereof for the autonomous vehicle 202 based on the travel-lane identification 230 and specifically for currently occupied or travelled lane. The navigation system 100 can further generate or process the vehicle movement control 228 based on the vehicle data 220 from multiple vehicles.

The navigation system 100 can process and generate the vehicle movement control 228 for controlling or maneuvering the autonomous vehicle 202. The vehicle movement control 228 is an instruction, a signal, a process, a method, a mechanism, or a combination thereof directing or controlling physical movement or travel of the autonomous vehicle 202.

For example, the navigation system 100 can generate the vehicle movement control 228 for maneuvering or controlling the autonomous vehicle 202 based on or according to the travel-lane identification 230 of the autonomous vehicle 202 and specific to the traffic lane 232 occupied or being traversed by the autonomous vehicle 202.

The navigation system 100 can further identify an adjacent lane 234. The adjacent lane 234 can include an instance of the traffic lane 232 next to or abutting the traffic lane 232 occupied or traversed by the autonomous vehicle 202.

The traffic lane 232 can be a roadway designated for use by a single line of vehicles. The traffic lane 232 can include major highways, one-lane roads designated as one-way traffic, express lanes, parking lanes, auxiliary lanes, and dedicated lanes. The traffic lane 232 can also include a lane, such as a section or an area, for travel by one vehicle in a particular direction, such as on a highway or a road.

The navigation system 100 can communicate the vehicle data 220 between the first device 102, the network 104, the smart vehicle 222, the autonomous vehicle 202, or a combination thereof. For an illustrative example, the navigation system 100 can include the first device 102 within the autonomous vehicle 202 as an instance of the smart vehicle 222, with the group of vehicles within a predetermined distance, relatively located according to a predetermined arrangement, or a combination thereof.

Continuing with the example, the navigation system 100 can use the vehicle data 220 generated or provided from the smart vehicle 222 without the user input 114. The navigation system 100 can utilize the vehicle data 220 to provide information, assist maneuvering, control maneuvers, publish HD maps of previously uncharted areas, or a combination thereof for other vehicles, such as the separate vehicle including another instance of the smart vehicle 222, the autonomous vehicle 202, or a combination thereof. The navigation system 100 can communicate the vehicle data 220 directly from the smart vehicle 222 or through the first device 102 to the second device 106 for processing and storage.

Continuing with the example, the navigation system 100 can communicate the vehicle data 220 through the second device 106 to other devices or vehicles, or directly communicate to the other devices or vehicles, such as for a peer-to-peer communication system. The navigation system 100 can communicate the vehicle data 220 for informing other devices or vehicles of the location or status of the smart vehicle 222 itself, about other vehicles detected and identified around the smart vehicle 222, or a combination thereof.

As a more specific example, the navigation system 100 can use the vehicle data 220 to generate the vehicle movement control 228, such as for steering, braking, setting or adjusting travel speed, accessary control, or a combination thereof. Details regarding the processing of the vehicle movement control 228 are discussed below.

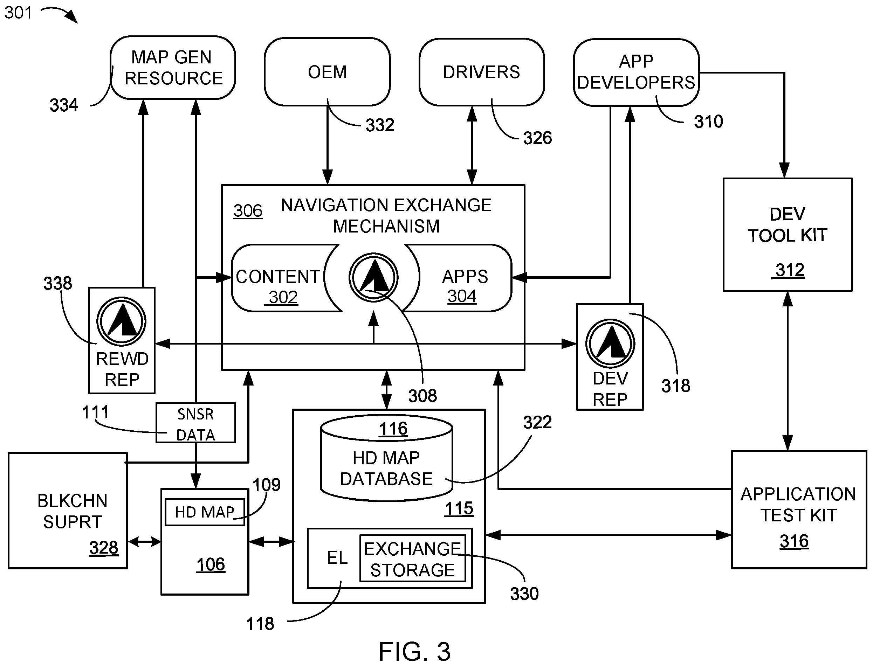

Referring now to FIG. 3, therein is shown an exemplary block diagram of the navigation system 100 including a high definition map development and delivery mechanism. The navigation system 100 can provide a mechanism for publishing and retrieving metric-based content 302 and applications 304 from a navigation exchange mechanism 306. The metric-based content 302 can be exchanged by the use of a crypto-currency 308, such as TelenavCoin, BitCoin, or other crypto-currency. The crypto-currency 308 is a digital asset based on general ledger to members of the chain and the general ledger represents the transactions for that chain. As an example, the crypto-currency 308 can be designed to work as a medium of exchange where individual coin ownership records are stored in a digital ledger or computerized database using strong cryptography and stored in multiple locations to secure transaction record entries and to control the creation of additional digital coin records.

The metric-based content 302 is navigation based service information and can include route planning services, high definition maps, or a combination thereof suitable for autonomous or driver assisted vehicles. The metric-based content 302 can also provide medical resources, testing centers, medical services, find-a-spot parking lot services, reservations on the route services, meals on the route services, travel supplies on the route, which can include gas, mechanical assistance, tires, or the like. Each of the metric-based content 302 can be exchanged through the crypto-currency 308.

The applications 304 can provide the user 112 of FIG. 1 with useful tools for identifying points-of-interest, determining availability of medical resources, calculating fuel efficiency, identifying suggested gas stations based on fuel reserves and route information, accessing hotel reservations along the route, accessing location based services, or a combination thereof. The applications 304 can be generated by application developers 310 and can be exchanged, accessed, or a combination thereof through the navigation exchange mechanism 306. The navigation exchange mechanism 306 is a location, protocol, or a combination thereof to load, access, exchange, or a combination thereof the metric-based content 302 and the applications 304.

The application developers 310 can be programmers that utilize a developer tool kit 312, such as an application programming interface (API) and modules to make the applications 304 compatible with the high definition map database 116. Once the applications 304 are developed, they must access and pass an application test kit 316 prior to being added to the high definition map database 116 and the navigation exchange mechanism 306. As an exchange for developing the applications 304, the application developers 310 can receive the crypto-currency 308 from a development repository 318. The application developers 310 can also receive royalties, in the form of the crypto-currency 308, based on the exchange or use of the application 304.

The second device 106, can be any of a variety of centralized or decentralized computing devices, or high definition video processing devices. For example, the second device 106 can be a computer, grid computing resources, a virtualized computer resource, cloud computing resource, routers, switches, peer-to-peer distributed computing devices, or a combination thereof

The navigation file storage 115, coupled to the second device 106, includes the high definition map database 116 accessed from a storage device 322 coupled to the second device 106. The storage device 322 can include a random array of independent disks (RAID), solid state storage devices (SSD's), a storage array including both hard disks and SSD's, or a combination thereof. The navigation file storage 115 can be loaded from the storage device 322 to memory of the navigation file storage 115. Upon power-down, the contents of the navigation file storage 115 is loaded back to the storage device 322 in order to preserve the content of the exchange log 118 and an exchange storage 330.

The navigation file storage 115 can maintain the exchange storage 330 to provide a tracking of the crypto-currency 308 that is exchanged to the application developers 310 for development of the applications 304. When the application 304 is used by drivers 326, a portion of the usage charges is exchanged back to the application developers 310 in the form of a ratio exchanged in the crypto-currency 308. A blockchain support 328 can perform encryption and distribution of the accounts maintained in the exchange storage 330. The second device 106 can perform the accounting of credits and debits for of the crypto-currency 308 distributed among the drivers 326, the application developers 310, an OEM contributor 332, a map generation resource 334, or a combination thereof, which is then saved to the exchange storage 330. By way of an example, the blockchain support 328 can be a hardware structure that includes hardware encryption, encryption seed generation, and distribution of the account files for the crypto-currency 308.

The second device 106 can include a combination of hardware and software that monitors the development, qualification, and use of the applications 304. The OEM contributor 332 can be a manufacturer of the first device 102, the autonomous vehicle 202 of FIG. 2, the smart vehicle 222 of FIG. 2, or a combination thereof. The OEM contributor 332 can include a vehicle manufacturer that provides vehicle information, maintenance suggestions, recall warnings, warranty updates, special offers, vehicle tracking service, anti-theft services, or a combination thereof that can be released to the navigation exchange mechanism 306.

The second device 106 can request an initial mapping of a location or region of interest through the network 104 of FIG. 1. The map generation resource 334 can compile location data and the data from high definition mapping sensors 110 of FIG. 1 to form the sensor data packet 111, which can be transmitted to the second device 106.

The map generation resource 334 can be any of the first device 102, the autonomous vehicle 202, or the smart vehicle 222 that can capture the sensor data packet 111 in the JPEG2000 standard format or better. The second device 106 can verify the sensor data packet 111 was generated in the correct location or region of interest, and can meet the JPEG2000 before compiling the data from the high definition mapping sensors 110 into the high definition map 109. Once verified by the second device 106, the compilation of the high definition can be published to the navigation exchange mechanism 306 for distribution, If the sensor data packet 111 was not captured in the location or region of interest or fails to meet the JPEG2000 standard, the second device 106 can reject the sensor data packet 111. If the second device 106 can successfully verify the sensor data packet 111, the high definition map 109 can be transferred to the navigation file storage 115 and can log the high definition map 109 as an asset of the particular one of the map generation resource 334 that performed the initial mapping of the region or area of interest.

The map generation resource 334 can be compensated for the initial generation of the high definition map 109 through a reward repository 338. If any of the drivers 326 access the high definition map 109, they are charged an amount of the crypto-currency 308 that is split between the navigation exchange mechanism 306 and the map generation resource 334 that performed the initial mapping of the region or area of interest.

It has been discovered that the navigation system 100 can provide the navigation exchange mechanism 306 in order to distribute the applications 304 and the metric-based content 302, as soon as they are published. The navigation system 100 can provide the latest developments in the applications 304 and the metric-based content 302, which will always provide the most up-to-date versions of the high definition map 109 for use by the drivers 326, the device 102, the autonomous vehicle 202 of FIG. 2, the smart vehicle 222 of FIG. 2, or a combination thereof. This publishing and distribution mechanism of the navigation system 100 represents an improvement over the annually updated databases that are currently distributed by most OEM sources. The blockchain support 328 can provide security and confidence in the integrity of the accounts held in the exchange storage 330 by providing software configured hardware encryption and distribution of the crypto-currency 308 accounts that are held in the exchange storage 330.

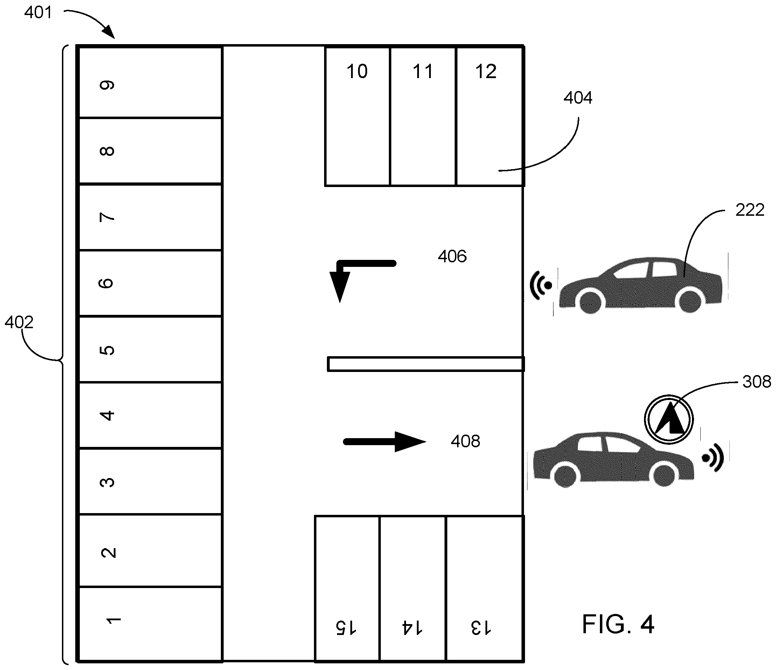

Referring now to FIG. 4, therein is shown an example of an initial mapping 401 of a portion of a region 402, such as the parking structure 402, for the navigation system 100 of FIG. 1. The example of the initial mapping 401 depicts the region 402 including a number of parking stalls 404. The region 402 can have an entry lane 406 and an exit lane 408 with painted arrows indicating the direction of flow.

By way of an example, the smart vehicle 222 can be equipped with the visual sensor 214 of FIG. 2, which is capable of recording the region 402 as the high definition map 109 of FIG. 1. The visual sensor 214 can capture the layout of the region 402 as well as any signage and floor markings. The layout of the region 402 can be recorded in sufficient detail that the exact dimensions of the parking stalls 404, the entry lane 406 and the exit lane 408 can be determined as part of the high definition map 109.

Upon exiting the region 402, the smart vehicle 222 can transmit the high definition map 109 of the region 402 to the second device 106 of FIG. 1. The user 112 of FIG. 1 of the smart vehicle 222 can receive credit of a sum of the crypto-currency 308 for performing the initial mapping 401 of the previously unmapped region or area of the region 402. As other vehicles, such as the first device 102, or the autonomous vehicle 202, utilize the parking stalls 404 of the region 402, they will exchange an amount of the crypto-currency 308. The parking fee for using the parking stalls 404 can be split between the navigation exchange mechanism 306 of FIG. 3 and the user 112 of the intelligent vehicle 222.

By way of an example, the smart vehicle 222 can record the vehicle data 220 received through the visual sensors 214 of FIG. 2 in order to generate the high definition map 109 for use by other vehicles. It is understood that by way of an example, the initial mapping 401 depicts generating the high definition map 109 for the region 402 and the same conditions apply to any region or area that is currently unmapped. In subsequent use of the region 402, a find-a-spot parking application can utilize the high definition map 109 generated by the intelligent device 222.

It has been discovered that the navigation system 100 can provide up-to-date maps, the metric-based content 302, and the applications 304 for use by the first device 102, or the autonomous vehicle 202. The ability of the smart vehicle 222 to record the input from the visual sensors 214 can allow an immediate update to an existing map that has been impacted by natural disaster, or some man-made phenomena. The navigation system 100 can provide highly accurate versions of the high definition map 109, while extending services and presenting the metric-based content 302.

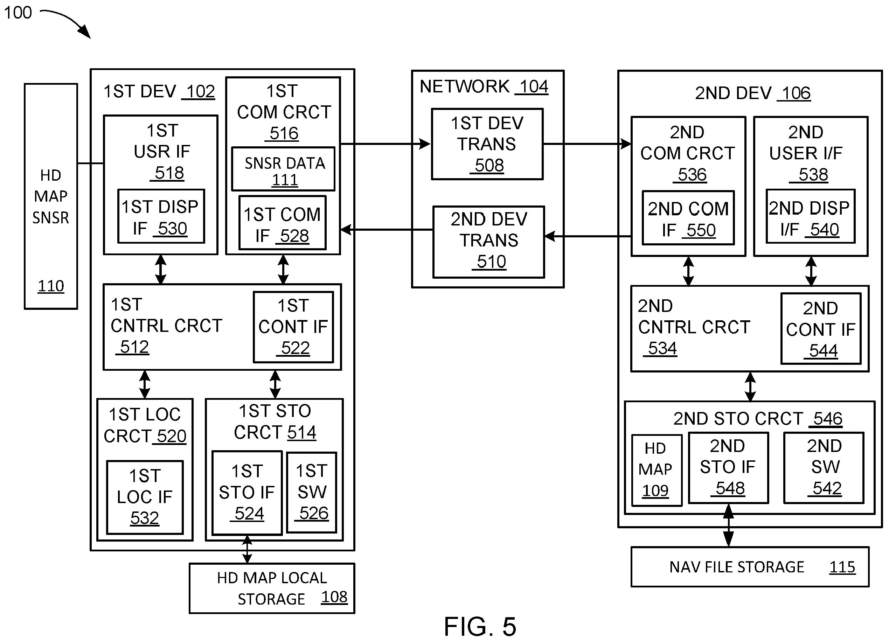

Referring now to FIG. 5, therein is shown an exemplary block diagram of the navigation system 100 of FIG. 1. The navigation system 100 can include the first device 102 of FIG. 1, the network 104 of FIG. 1, and the second device 106 of FIG. 1. The first device 102 can send information in a first device transmission 508 over the network 104 to the second device 106. The second device 106 can send information in a second device transmission 510 over the network 104 to the first device 102.

For illustrative purposes, the navigation system 100 is shown with the first device 102 as a client device, although it is understood that the navigation system 100 can include the first device 102 as a different type of device. For example, the first device 102 can be a server containing a display interface.

Also for illustrative purposes, the navigation system 100 is shown with the second device 106 as a server, although it is understood that the navigation system 100 can include the second device 106 as a different type of device. For example, the second device 106 can be a client device.

Also, for illustrative purposes, the navigation system 100 is shown with interaction between the first device 102 and the second device 106. However, it is understood that the first device 102 can similarly interact with the autonomous vehicle 202 of FIG. 2, the smart vehicle 222 of FIG. 2, or a combination thereof. Similarly, the second device 106 can similarly interact with the autonomous vehicle 202, the intelligent vehicle 222, or a combination thereof.

For brevity of description in this embodiment of the present invention, the first device 102 will be described as a client device and the second device 106 will be described as a server device. The embodiment of the present invention is not limited to this selection for the type of devices. The selection is an example of an embodiment of the present invention.

The first device 102 can include a first control circuit 512, a first storage circuit 514, a first communication circuit 516, and a first user interface 518, and a first location circuit 520. The first control circuit 512 can include a first control interface 522. The first control circuit 512 can execute a first software 526 to provide the intelligence of the navigation system 100.

The first control circuit 512 can be implemented in a number of different manners. For example, the first control circuit 512 can be a processor, an application specific integrated circuit (ASIC) an embedded processor, a microprocessor, a hardware control logic, a hardware finite state machine (FSM), a digital signal processor (DSP), or a combination thereof. The first control interface 522 can be used for communication between the first control circuit 512 and other functional units or circuits in the first device 102. The first control interface 522 can also be used for communication that is external to the first device 102.

The first control interface 522 can receive information from the other functional units/circuits or from external sources, or can transmit information to the other functional units/circuits or to external destinations. The external sources and the external destinations refer to sources and destinations external to the first device 102.

The first control interface 522 can be implemented in different ways and can include different implementations depending on which functional units/circuits or external units/circuits are being interfaced with the first control interface 522. For example, the first control interface 522 can be implemented with a pressure sensor, an inertial sensor, a microelectromechanical system (MEMS), optical circuitry, waveguides, wireless circuitry, wireline circuitry, or a combination thereof.

The first storage circuit 514 can store the first software 526. The first storage circuit 514 can also store the relevant information, such as data representing incoming images, data representing previously presented image, sound files, or a combination thereof.

The first storage circuit 514 can be a volatile memory, a nonvolatile memory, an internal memory, an external memory, or a combination thereof. For example, the first storage circuit 514 can be a nonvolatile storage such as non-volatile random access memory (NVRAM), Flash memory, disk storage, or a volatile storage such as static random access memory (SRAM).

The first storage circuit 514 can include a first storage interface 524. The first storage interface 524 can be used for communication between the first storage circuit 514 and other functional units or circuits in the first device 102, such as the high definition map local storage 108. The first storage interface 524 can also be used for communication that is external to the first device 102.

The first storage interface 524 can receive information from the other functional units/circuits or from external sources, or can transmit information to the other functional units/circuits or to external destinations. The external sources and the external destinations refer to sources and destinations external to the first device 102.

The first storage interface 524 can include different implementations depending on which functional units/circuits or external units/circuits are being interfaced with the first storage circuit 514. The first storage interface 524 can be implemented with technologies and techniques similar to the implementation of the first control interface 522.

The first communication circuit 516 can enable external communication to and from the first device 102. For example, the first communication circuit 516 can permit the first device 102 to communicate with the second device 106, an attachment, such as a peripheral device or a desktop computer, and the network 104.

The first communication circuit 516 can also function as a communication hub allowing the first device 102 to function as part of the network 104 and not limited to be an end point or terminal circuit to the network 104. The first communication circuit 516 can include active and passive components, such as microelectronics or an antenna, for interaction with the network 104.

The first communication circuit 516 can include a first communication interface 528 of FIG. 5. The first communication interface 528 can be used for communication between the first communication circuit 516 and other functional units or circuits in the first device 102. By way of an example the first communication circuit 516 can retrieve the high definition map 109 of FIG. 1, from the high definition map local storage 108, through the first storage interface 524 in order to transmit it to the second device 106 for further processing and distribution. The first communication interface 528 can receive information from the second device 106 for distribution to the other functional units/circuits or can transmit information to the other functional units or circuits.

The first communication interface 528 can include different implementations depending on which functional units or circuits are being interfaced with the first communication circuit 516. The first communication interface 528 can be implemented with technologies and techniques similar to the implementation of the first control interface 522.

The first user interface 518 allows the user 112 of FIG. 1 to interface and interact with the first device 102. The first user interface 518 can include an input device and an output device. Examples of the input device of the first user interface 518 can include a keypad, a touchpad, soft-keys, a keyboard, a microphone, an infrared sensor for receiving remote signals, the high definition map sensors 110, or any combination thereof to provide data and communication inputs. By way of an example, the high definition map sensors 110 can be input to the first user interface 518 through a wired or wireless connection. The first user interface 518 can pass the input from the high definition map sensors 110 to the first control circuit 112 for processing and storage.

The first user interface 518 can include a first display interface 530. The first display interface 530 can include an output device. The first display interface 530 can include a display, a projector, a video screen, a speaker, or any combination thereof.

The first control circuit 512 can operate the first user interface 518 to display information generated by the navigation system 100. The first control circuit 512 can also execute the first software 526 for the other functions of the navigation system 100, including receiving location information from the first location circuit 520. The first control circuit 512 can further execute the first software 526 for interaction with the network 104 via the first communication circuit 516.

The first control circuit 512 can operate the first user interface 518 to collect data from the high definition mapping sensors 119. The first control circuit 512 can also receive location information from the first location circuit 520. While operating as the map generation resource 334 of FIG. 3, the first control circuit 512 can compile the sensor data packet 111, including the location data from the first location circuit 520, time, and the data from the high definition mapping sensors 110. The first control circuit 512 can send the sensor data packet 111, through the first communication circuit 516, to the second device 106 for processing.

The first location circuit 520 can generate location information, current heading, current acceleration, and current speed of the first device 102, as examples. The first location circuit 520 can be implemented in many ways. For example, the first location circuit 520 can function as at least a part of the global positioning system, an inertial navigation system, a cellular-tower location system, a pressure location system, or any combination thereof. Also, for example, the first location circuit 520 can utilize components such as an accelerometer or global positioning system (GPS) receiver.

The first location circuit 520 can include a first location interface 532. The first location interface 532 can be used for communication between the first location circuit 520 and other functional units or circuits in the first device 102. The first location interface 532 can also be used for communication external to the first device 102.

The first location interface 532 can receive information from the other functional units/circuits or from external sources, or can transmit information to the other functional units/circuits or to external destinations. The external sources and the external destinations refer to sources and destinations external to the first device 102.

The first location interface 532 can include different implementations depending on which functional units/circuits or external units/circuits are being interfaced with the first location circuit 520. The first location interface 532 can be implemented with technologies and techniques similar to the implementation of the first control circuit 512.

The second device 106 can be optimized for implementing an embodiment of the present invention in a multiple device embodiment with the first device 102. The second device 106 can provide the additional or higher performance processing power compared to the first device 102. The second device 106 can include a second control circuit 534, a second communication circuit 536, a second user interface 538, and a second storage circuit 546.

The second user interface 538 allows a user (not shown) to interface and interact with the second device 106. The second user interface 538 can include an input device and an output device. Examples of the input device of the second user interface 538 can include a keypad, a touchpad, soft-keys, a keyboard, a microphone, or any combination thereof to provide data and communication inputs. Examples of the output device of the second user interface 538 can include a second display interface 540. The second display interface 540 can include a display, a projector, a video screen, a speaker, or any combination thereof.

The second control circuit 534 can receive the sensor data packet 111 through the second communication circuit 536. The second control circuit can verify the content of the sensor data packet 111 does indeed represent the region 402 of FIG. 4 that was requested from the map generation resource 334, by examining the location data, time, and high definition mapping sensor 110 data. Once the sensor data packet has been verified, the second control circuit 534 can compile the high definition map 109 for transfer to the high definition map database 116 of FIG. 1 stored in the navigation file storage 115. The second control circuit 534 can then publish the high definition map 109 to the navigation exchange mechanism 306 of FIG. 3 for distribution.

The second control circuit 534 can execute a second software 542 to provide the intelligence of the second device 106 of the navigation system 100. The second software 542 can operate in conjunction with the first software 526. The second control circuit 534 can provide additional performance compared to the first control circuit 512.

The second control circuit 534 can operate the second user interface 538 to display information. The second control circuit 534 can also execute the second software 542 for the other functions of the navigation system 100, including operating the second communication circuit 536 to communicate with the first device 102 over the network 104.

The second control circuit 534 can be implemented in a number of different manners. For example, the second control circuit 534 can be a processor, an embedded processor, a microprocessor, hardware control logic, a hardware finite state machine (FSM), a digital signal processor (DSP), or a combination thereof.

The second control circuit 534 can include a second control interface 544. The second control interface 544 can be used for communication between the second control circuit 534 and other functional units or circuits in the second device 106. The second control interface 544 can also be used for communication that is external to the second device 106.

The second control interface 544 can receive information from the other functional units/circuits or from external sources, or can transmit information to the other functional units/circuits or to external destinations. The external sources and the external destinations refer to sources and destinations external to the second device 106.

The second control interface 544 can be implemented in different ways and can include different implementations depending on which functional units/circuits or external units/circuits are being interfaced with the second control interface 544. For example, the second control interface 544 can be implemented with a pressure sensor, an inertial sensor, a microelectromechanical system (MEMS), optical circuitry, waveguides, wireless circuitry, wireline circuitry, or a combination thereof.

The second storage circuit 546 can store the second software 542. The second storage circuit 546 can also store the information such as data representing incoming images, data representing previously presented image, sound files, or a combination thereof. The second storage circuit 546 can be sized to provide the additional storage capacity to supplement the first storage circuit 514.

For illustrative purposes, the second storage circuit 546 is shown as a single element, although it is understood that the second storage circuit 546 can be a distribution of storage elements. Also, for illustrative purposes, the navigation system 100 is shown with the second storage circuit 546 as a single hierarchy storage system, although it is understood that the navigation system 100 can include the second storage circuit 546 in a different configuration. For example, the second storage circuit 546 can be formed with different storage technologies forming a memory hierarchal system including different levels of caching, main memory, rotating media, or off-line storage.

The second storage circuit 546 can be a volatile memory, a nonvolatile memory, an internal memory, an external memory, or a combination thereof. For example, the second storage circuit 546 can be a nonvolatile storage such as non-volatile random access memory (NVRAM), Flash memory, disk storage, or a volatile storage such as static random access memory (SRAM).

The second storage circuit 546 can include a second storage interface 548. The second storage interface 548 can be used for communication between the second storage circuit 546 and other functional units or circuits in the second device 106. The second storage interface 548 can also be used for communication that is external to the second device 106, such as the navigation file storage 115, which can maintain the high definition map database 116 of FIG. 1 and the exchange log 118 of FIG. 1.

The second storage interface 548 can receive information from the other functional units/circuits or from external sources, or can transmit information to the other functional units/circuits or to external destinations. The external sources and the external destinations refer to sources and destinations external to the second device 106.

The second storage interface 548 can include different implementations depending on which functional units/circuits or external units/circuits are being interfaced with the second storage circuit 546. The second storage interface 548 can be implemented with technologies and techniques similar to the implementation of the second control interface 544.

The second communication circuit 536 can enable external communication to and from the second device 106. For example, the second communication circuit 536 can permit the second device 106 to communicate with the first device 102 over the network 104. By way of an example, the second device 106 can provide the high definition map 109 to the first device 102 in response to a request from the user 112.

The second communication circuit 536 can also function as a communication hub allowing the second device 106 to function as part of the network 104 and not limited to be an end point or terminal unit or circuit to the network 104. The second communication circuit 536 can include active and passive components, such as microelectronics or an antenna, for interaction with the network 104.

The second communication circuit 536 can include a second communication interface 550. The second communication interface 550 can be used for communication between the second communication circuit 536 and other functional units or circuits in the second device 106. The second communication interface 550 can receive information from the other functional units/circuits or can transmit information to the other functional units or circuits.

The second communication interface 550 can include different implementations depending on which functional units or circuits are being interfaced with the second communication circuit 536. The second communication interface 550 can be implemented with technologies and techniques similar to the implementation of the second control interface 544.

The first communication circuit 516 can couple with the network 104 to send vehicle data 220 including the high definition maps 109 of FIG. 1 to the second device 106 in the first device transmission 508. The second device 106 can receive information in the second communication circuit 536 from the first device transmission 508 of the network 104.

The second communication circuit 536 can couple with the network 104 to send information to the first device 102 in the second device transmission 510. The first device 102 can receive information in the first communication circuit 516 from the second device transmission 510 of the network 104. The navigation system 100 can be executed by the first control circuit 512, the second control circuit 534, or a combination thereof. For illustrative purposes, the second device 106 is shown with the partition containing the second user interface 538, the second storage circuit 546, the second control circuit 534, and the second communication circuit 536, although it is understood that the second device 106 can include a different partition. For example, the second software 542 can be partitioned differently such that some or all of its function can be in the second control circuit 534 and the second communication circuit 536. Also, the second device 106 can include other functional units or circuits not shown in FIG. 5 for clarity.

The functional units or circuits in the first device 102 can work individually and independently of the other functional units or circuits. The first device 102 can work individually and independently from the second device 106 and the network 104.

The functional units or circuits in the second device 106 can work individually and independently of the other functional units or circuits. The second device 106 can work individually and independently from the first device 102 and the network 104.

The functional units or circuits described above can be implemented in hardware. For example, one or more of the functional units or circuits can be implemented using the a gate, circuitry, a processor, a computer, integrated circuit, integrated circuit cores, a pressure sensor, an inertial sensor, a microelectromechanical system (MEMS), a passive device, a physical non-transitory memory medium containing instructions for performing the software function, a portion therein, or a combination thereof.

For illustrative purposes, the navigation system 100 is described by operation of the first device 102 and the second device 106. It is understood that the first device 102 and the second device 106 can operate any of the modules and functions of the navigation system 100.

By way of a further example, the first device 102 can be the autonomous vehicle 202 of FIG. 2. The first user interface 518 can receive input from the location-movement sensor 212 of FIG. 2, the visual sensor 214 of FIG. 2, such as the high definition camera sensor 214 of FIG. 2, the radar sensor 216 of FIG. 2, the accessory sensor 218 of FIG. 2, or the combination thereof for compiling the high definition map 109 of FIG. 1. The high definition map 109 can be generated by the first control circuit 512 from the location-movement sensor 212, the visual sensor 214, such as the high definition camera sensor 214, the radar sensor 216, the accessory sensor 218, or the combination thereof. The high definition map 109 can be sent through the first communication circuit 516 and the network 104 to the second device 106 for incorporation in the high definition map database 116 of FIG. 1.

It has been discovered that the second device 106 can request the initial mapping 401 of FIG. 4 of a region 402 of interest. that can be responded to in a short time of minutes to hours, for the map generating resource 334 to product the sensor data packet 111 and send it to the second device 106. The second control circuit 534 can perform the verification of the sensor data packet 111, compile the high definition map 109 from the sensor data packet 111, and publish the high definition map 109 to the navigation exchange mechanism 306, in less than one hour, for distribution to the drivers 326 of FIG. 3, the autonomous vehicles 202 of FIG. 2, the smart vehicle 222 of FIG. 2, or a combination thereof. This is in stark comparison to other OEM and mapping services that Provide annual updates, thus improving the integrity of the high definition map 109 and providing safe and reliable information to the user 112 of FIG. 1

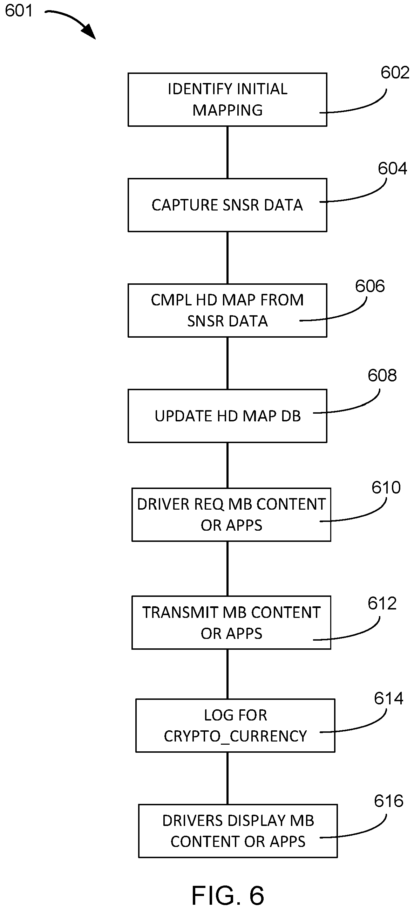

Referring now to FIG. 6, therein is shown an exemplary control flow 601 of the navigation system 100 of FIG. 1. The exemplary control flow 601 of the navigation system 100 can identify the initial mapping 401 of FIG. 4 in a module 602. The map generation resources 334 of FIG. 3 can locate the region or area of the initial mapping 401 and capture the sensor data packet 111 of FIG. 1 to address the initial mapping 401 in a module 604. The map generation resources 334 can transmit the sensor data packet 111 to the second device 106 of FIG. 1 for verification of the sensor data packet 111 and compilation of the high definition map 109 of FIG. 1 in a module 606.

The second device 106 can update the high definition map database 116 of FIG. 1 with the high definition map 109 and credit the transaction in the navigation file storage 115 in a module 608. The second device 106 can receive a request for the metric-based content 302 or applications 304 from the drivers 326 of FIG. 3, in a module 610. The second device 106 can transmit the metric-based content 302 or the applications 304 requested by the first device 102, the autonomous vehicle 202, the intelligent vehicle 222, or the combination thereof, as requested by the drivers 326, in a module 612.

The second device 106 can account for the crypto-currency 308 transferred for the metric-based content 302 or the applications 304 by updating the exchange log 118 of FIG. 1, in a module 614. The drivers 326 can display the metric-based content 302, including the high definition maps 109, the applications 304 in the first device 102, the autonomous vehicle 202, the intelligent vehicle 222, or the combination thereof, in a module 616.

It has been discovered that the navigation system 100 can request the initial mapping 401 of an area or the region 402 that can be executed by the map generation resources 334. The map generation resources 334 can be any of the first device 102, the autonomous vehicle 202, the smart vehicle 222 capable of recording the area or the region 402 in JPEG-2000 standard format or better. When the map generation resources 334 transmits the sensor data packet 111 and the second device has verified the content and complied the high definition map 109, they receive compensation for the recording and additional compensation whenever their high definition map 109 is accessed by other ones of the drivers 326. This incentive program can assure the metric-based content 302, including the high definition map 109, can be maintained for best accuracy in the shortest possible time. All of the compensation is based on the crypto-currency 308, including TelenavCoin or BitCoin.

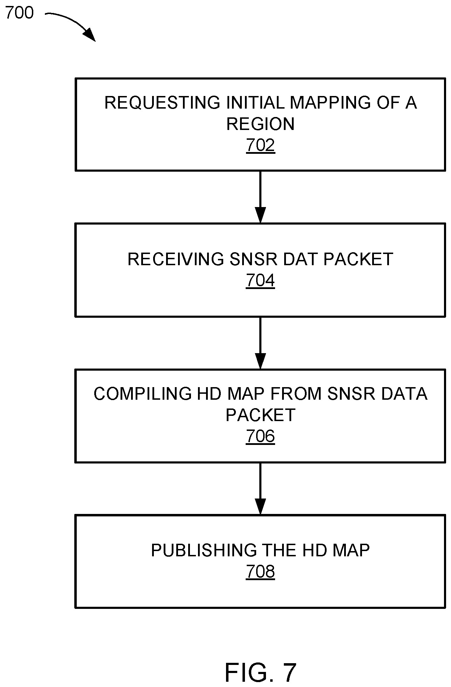

Referring now to FIG. 7, therein is shown a flow chart of a method 700 of operation of a navigation system 100 of FIG. 1 in an embodiment of the present invention. The method 700 includes: requesting an initial mapping of a region in block 702; receiving a sensor data packet from a map generation resource in a block 704; compiling a high definition map from the sensor data packet in a block 706; and publishing the high definition map, as metric-based content, to a navigation exchange mechanism in a block 708.

The resulting method, process, apparatus, device, product, and/or system is straightforward, cost-effective, uncomplicated, highly versatile, accurate, sensitive, and effective, and can be implemented by adapting known components for ready, efficient, and economical manufacturing, application, and utilization. Another important aspect of an embodiment of the present invention is that it valuably supports and services the historical trend of reducing costs, simplifying systems, and increasing performance.

These and other valuable aspects of an embodiment of the present invention consequently further the state of the technology to at least the next level.

While the invention has been described in conjunction with a specific best mode, it is to be understood that many alternatives, modifications, and variations will be apparent to those skilled in the art in light of the foregoing description. Accordingly, it is intended to embrace all such alternatives, modifications, and variations that fall within the scope of the included claims. All matters set forth herein or shown in the accompanying drawings are to be interpreted in an illustrative and non-limiting sense.

## Claims

1. A navigation system (100) comprising:
a communication circuit (536) configured to:
request an initial mapping (401) of a region (402), and
receive a sensor data packet (111) for the region (402) from a map generation resource (334);
a control circuit (534), coupled to the communication circuit (536), configured to:
compile the high definition map (109) from the sensor data packet (111); and
publish the high definition map (109), as metric-based content (302), to a navigation exchange mechanism (306).

2. The system (100) as claimed in claim 1 wherein the control circuit (534) is configured to:
integrate the high definition map (109) into the high definition map database (116); and
publish the high definition map database (116) as the metric-based content (302) in exchange for a crypto-currency (308).

3. The system (100) as claimed in claim 1 or 2, wherein the control circuit (534) is configured to provide the metric-based content (302) and an application (304) to a device (102), the autonomous vehicle (202), the smart vehicle (222), or a combination thereof.

4. The system (100) as claimed in any of the preceding claims, wherein the control circuit (534) is configured to log the transaction of a crypto-currency (308) in exchange for generating the high definition map (109), the metric-based content (302), an application (304), development of the application (304), or a combination thereof.

5. The system (100) as claimed in any of the preceding claims, wherein the control circuit (534) is configured to manage an exchange log (118) including an exchange storage (330) for encryption and distribution by a blockchain support (328).

6. The system (100) as claimed in any of the preceding claims, wherein the communication circuit (536) is configured to publish the high definition map (109) to a navigation exchange mechanism (306) for use by a device (102), the autonomous vehicle (202), the smart vehicle (222), or a combination thereof.

7. The system (100) as claimed in any of the preceding claims, wherein the control circuit (534) is configured to:
accept an application (304) from an application developer (310) when:
the application (304) is based on a developer tool kit (312), and
the application (304) is verified by an application test kit (316); and
post the application (304) in the navigation exchange mechanism (306) for access by a device (102), the autonomous vehicle (202), or the smart vehicle (222), or a combination thereof.

8. The system (100) as claimed in any of the preceding claims, wherein the control circuit (534) is configured to:
exchange a crypto-currency (308) for use of an application (304) or the metric-based content (302) by a device (102), the autonomous vehicle (202), or the smart vehicle (222), or a combination thereof; and
distribute the crypto-currency (308) among the map generation resource (334), an application developer (310), the navigation exchange mechanism (306), or a combination thereof.

9. A method (700) of operation for a navigation system (100) comprising:
requesting an initial mapping (401) of a region (402);
receiving a sensor data packet (111) for the region (402) from a map generation resource (334);
compiling a high definition map (109) from the sensor data packet (111); and
publishing the high definition map (109), as metric-based content (302), to a navigation exchange mechanism (306).

10. The method (700) as claimed in claim 9 further compromising:
integrating the high definition map (109) into a high definition map database (116); and
offering the high definition map database (116) as the metric-based content (302) in exchange for a crypto-currency (308).

11. The method (700) as claimed in claim 9 or 10, further comprising providing the metric-based content (302) and an application (304) to a device (102), the autonomous vehicle (202), the smart vehicle (222), or a combination thereof.

12. The method (700) as claimed in any of the claims 9 to 11, further comprising logging the transactions of a crypto-currency (308) in exchange for generating the high definition map (109), the metric-based content (302), an application (304), development of the application (304), or a combination thereof.

13. The method (700) as claimed in any of the claims 9 to 12, further comprising managing an exchange log (118) including an exchange storage (330) for encryption and distribution by a blockchain support (328).

14. The method (700) as claimed in any of the claims 9 to 13, wherein publishing the high definition map (109) to the navigation exchange mechanism (306) offers the high definition map (109) for use by a device (102), the autonomous vehicle (202), the smart vehicle (222), or a combination thereof.
